# EUROPEAN PATENT APPLICATION

(11) **EP 4 811 514 A1**
(43) Date of publication of application: **23.09.2026**
(21) Application number: 25218297.7
(22) Date of filing: 25.11.2025
(51) Int. Cl.: H01M 50/207, H01M 50/247, H01M 50/588

(54) **USER-REPLACEABLE SOFT-PACK BATTERY**

(30) Priority: 21.03.2025 US 202519087295
(71) Applicant: INTEL Corporation, Santa Clara, CA 95054 (US)
(72) Inventor: SINGH, Jagadish, 560103 Bangalore (IN); LEE, Ming-Chia, New Taipei City (TW); MATSUMURA, Naoki, San Jose, 95118 (US); KURMA RAJU, Prakash, 560068 Bangalore (IN); PICHUMANI, Prasanna, 560068 Bangalore (IN); SRINIVAS, Sowmya, 570008 Mysuru (IN); SHIVASWAMY, Spoorthy, Bangalore (IN); GHOSH, Subhajit, Bangalore (IN)
(74) Representative: Viering, Jentschura & Partner mbB Patent- und Rechtsanwälte

(57) **Abstract**

Embodiments herein relate to a battery pack for a portable computing device such as a laptop or other battery-powered device. The battery pack includes one or more key structures that are coded to a chemistry and/or other characteristics of the battery cells within the pack. The key structures can be formed on an exterior surface of the battery package using a rigid material such as plastic. In one approach, the exterior surface comprises a soft-sided material such as aluminum-plastic or Mylar^{®}. The key structures can include protrusions and recesses which extend along a length of the battery package. The key structures match corresponding inverse key structures in a battery container so that only a compatible battery can be installed in the container. The key structures can be added to a cylindrical battery, or to a rectangular frame of a pouch or prismatic cell-based battery pack.

## Description

### BACKGROUND

With the increasing popularity of portable computing devices such as laptop computers, there has been a corresponding increasing production of battery packs. However, the battery packs are typically integrated with the computer chassis and not designed to be replaceable. In some cases, a battery pack can be replaced using by a technician with specialized tools and technical knowledge. This presents challenges in terms of repairability, replaceability and sustainability.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
FIG. 1 depicts an example soft-pack battery pack 100 including four battery cells 110, 120, 130 and 140 in a package 150, in accordance with various embodiments.
FIG. 2 depicts an example view of the display hinge structure 200 of a laptop to hold a battery pack such as the battery pack 100 of FIG. 1, in accordance with various embodiments.
FIG. 3 depicts an example view of an interior 310 of the display hinge structure 200 of FIG. 2, in accordance with various embodiments.
FIG. 4A depicts a side view of an example battery package 400 including a key structure 410, in accordance with various embodiments.
FIG. 4B depicts a front view of the battery package 400 of FIG. 4A, in accordance with various embodiments.
FIG. 5 depicts a front view of an example container 500 for the battery package 400 of FIG. 4A and 4B, in accordance with various embodiments.
FIG. 6 depicts a front view of another example battery package 600, where the key structure 610 is narrower than the key structure 410 of FIG. 4B, in accordance with various embodiments.
FIG. 7 depicts a front view of another example battery package 700, where the key structure 710 has the same arc length as the key structure 410 of FIG. 4B, but the cylindrical wall 715 does not fully encircle the battery cell 720, in accordance with various embodiments.
FIG. 8 depicts a side view of an example battery package 800 similar to FIG. 4A but where the key structure 810 extends only partially along the length of the battery package, in accordance with various embodiments.
FIG. 9 depicts a front view of another example battery package 900 with a key structure 930 including a recess 913 with a first arc length w1 formed between protrusions 910 and 911, in accordance with various embodiments.
FIG. 10A depicts a front view of another example battery package 1000 with a key structure 1030 including a recess 1013 with a second arc length w2 > w1 formed between protrusions 1010 and 1011, in accordance with various embodiments.
FIG. 10B depicts a front view of another example battery package 1000a with a key structure 1030a including a recess 1013 with an arc length w1 formed between protrusions 1010a and 1011a with arc lengths w1c and wlb, respectively, in accordance with various embodiments.
FIG. 11A depicts a front view of an example battery package 1100 with a key structure including two protrusions 1110 and 1111, in accordance with various embodiments.
FIG. 11B depicts a front view of an example battery package 1100a with a key structure including two protrusions 1110a and 1111a attached directly to the outer surface 1100b of a soft-sided battery, in accordance with various embodiments.
FIG. 12 depicts a front view of an example battery package 1200 with a key structure including four protrusions 1210, 1211, 1212 and 1213, in accordance with various embodiments.
FIG. 13 depicts a front view of an example battery package 1300 with a key structure including six protrusions 1310, 1311, 1312, 1313, 1314 and 1315, in accordance with various embodiments.
FIG. 14A depicts a side view of multiple battery packages 1410, 1420 and 1430 arranged serially which have different key structures 1412, 1421 and 1432, respectively, in accordance with various embodiments.
FIG. 14B depicts a front view of the battery package 1410 and key structure protrusion 1411 of FIG. 14A, in accordance with various embodiments.
FIG. 14C depicts a front view of the battery package 1420 and key structure 1421 of FIG. 14A, in accordance with various embodiments.
FIG. 14D depicts a front view of the battery package 1430 and key structure 1431 of FIG. 14A, in accordance with various embodiments.
FIG. 15 depicts a view of an example battery package 1500 with key structures 1510, 1520 and 1530 being inserted into a corresponding battery package container 1550, in accordance with various embodiments.
FIG. 16A depicts a view of an example mating mechanism 1600 for the battery package container 1550 of FIG. 15, in accordance with various embodiments.
FIG. 16B depicts a view of the example mating mechanism 1600 of FIG. 16A with the battery package container 1550 of FIG. 15 attached, in accordance with various embodiments.
FIG. 17 depicts an example view of a rectangular battery pack 1700 including a key structure, in accordance with various embodiments.
FIG. 18 depicts a cross-sectional view of an example frame 1800 for the rectangular battery pack 1700 of FIG. 17, where the frame has a key structure 1810 including recesses 1811 and 1812 with a distance d1 between the recesses, in accordance with various embodiments.
FIG. 19 depicts a cross-sectional view of an example frame 1900 for the rectangular battery pack 1700 of FIG. 17, where the frame has a key structure 1910 including recesses 1911 and 1912 with a distance d2>d1 between the recesses, in accordance with various embodiments.
FIG. 20 depicts an example side view of a laptop computer 2000 including a barrel hinge 2050 for a battery pack, in accordance with various embodiments.
FIG. 21 depicts an front view of an example of a battery package container 2100 with battery packages 2120 and 2170 arranged in parallel, in accordance with various embodiments.
FIG. 22 illustrates an example of components that may be present in a computing system 2250 for implementing the techniques (e.g., operations, processes, methods, and methodologies) described herein.

### DETAILED DESCRIPTION

As mentioned at the outset, various challenges are encountered in designing battery packs for portable computing device while meeting goals for repairability, replaceability and sustainability.

In the realm of laptop design, the shift from cylindrical batteries - valued for their standard form factor, reliability, ease of high-volume manufacturing, cost-effectiveness and established supply chains - to pouch cells has been gradual. This shift has been driven by the demand for thinner, lighter, and more space-efficient designs. Over the past two decades or so, this transition has been evident as laptop manufacturers strived to create more portable and sleek devices. But this shift has also led to devices with non-replaceable or difficult-to-replace battery packs, which contradicts the desire for repairability, replaceability and sustainability.

In some cases, the battery packs are replaceable by a trained technician. Batteries can be dangerous and should not be replaced by unauthorized users who do not understand the cell chemistry involved. Replacement by an unauthorized user can also create a safety hazard or diminish the user experience due to a reduced cycle life or battery life if all cells are not replaced correctly.

One possible solution involves using replaceable prismatic or pouch-cell based battery packs. However, these can be proprietary to the manufacturer and therefore not available for wide industry adoption. Also, it can be difficult to distinguish between battery packs made by different manufacturers, of even battery packs made by a given manufacturer, resulting in a safety hazard when the batteries have different chemistries and/or capabilities and/or the wrong battery is used in a computing device.

In some cases, the pouch/prismatic cell-based battery packs are difficult to replace due to the retention mechanism supported (e.g., adhesives or glue strips). The retention mechanism can be specific to each manufacturer and may vary within products of the same manufacturer.

The solutions provided herein address the above and other issues. In one aspect, the solutions provide a battery pack for a portable computing device such as a laptop. The battery pack includes one or more key structures that are coded to a chemistry (e.g., chemical compositions) and/or other characteristic of the battery cells within the pack. The key structures can be formed on an exterior surface of the battery package using a rigid material such as plastic. In one approach, the exterior surface comprises a soft-sided material such as aluminum-plastic or Mylar^{®}. The key structures can include protrusions and recesses which extend fully or partially along a length of the battery package. The key structures match corresponding inverse key structures in a battery container so that only a compatible battery can be installed in the container. The key structures can be added to soft-sided or hard-sided battery packages. The container may be at the display hinge of a laptop computer, for example.

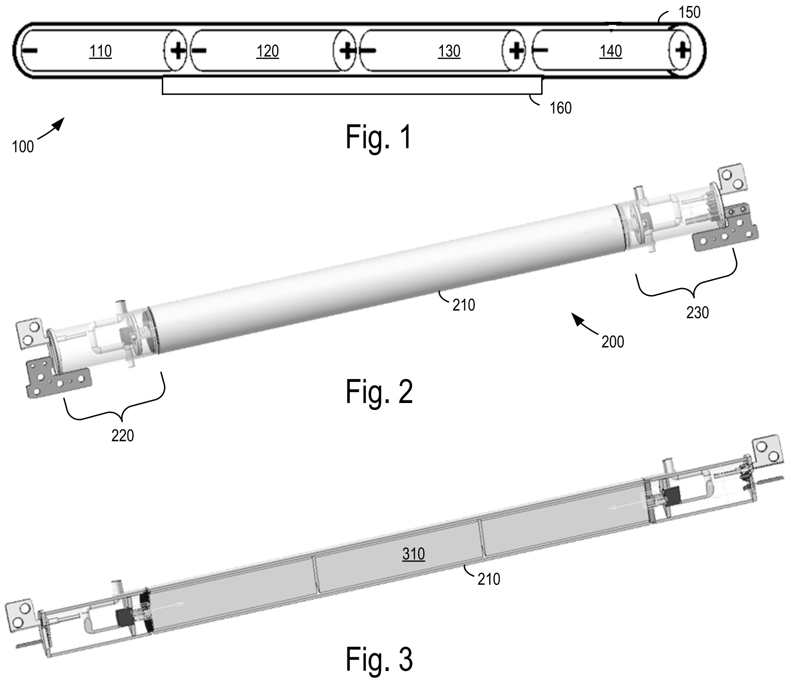

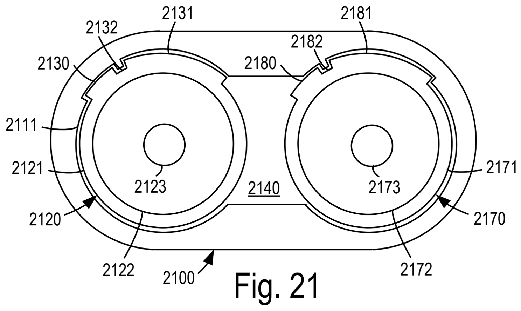

The solutions are compatible with single-cylinder based form factors such as 3S1P and 4S1P in FIG. 1, or dual-in-parallel form factor such as 3S2P applicable by FIG. 21, or more-in-parallel form factor such as 3S3P, or more in parallels or series.

The solutions provide a number of advantages. For example, the solutions address the goals of repairability, replaceability and sustainability in a cost-effective manner for battery packs, including guidelines introduced by government agencies.

The solutions address these goals for battery packages with different form factors, including cylindrical, and can be extrapolated to pouch or prismatic cell-based battery pack designs in other form factors such as rectangular. The battery packages can be used in portable computing devices such as laptops, portable consumer electronics, digital health appliances; as well as in electric vehicles (e-bikes or EVs), drones, or ESS (energy storage systems) and other battery-powered electronic devices.

The solutions can provide greater device durability, reduced landfill, compliance with government regulations, space efficiency, modularity, serviceability, reliability, and performance at a cost-effective price point since the key features are coined with the streamlined processes from the above aspects.

The solutions provide a number of advantages, including a robust battery pack which is compatible with industry standard cylindrical batteries such as sizes 18650, 18500, 16650 and 14650. For example, an 18650 size is 18 mm in diameter by 65 mm in length. The solutions can be adopted to other form-factors such as rectangular or irregular shaped cells (pouch/prismatic).

The solutions provide a sustainable and cost-effective battery pack that can be produced by any pack-house and can be used by any complying product design.

The solutions address concerns regarding the potential mixing and matching of different chemistries available in the same form-factor.

The solutions allow recyclers to visually identify the chemicals used in the battery through the key structures to enable easier recycling. The solutions facilitate robotic recycling techniques.

The solutions allow system manufacturers to avoid inauthentic battery chemistries, counterfeit batteries, to lower safety risks in the aftermarket.

Further, from a supply chain point of view, the solutions provide opportunities for multi-sourcing, allowing different battery suppliers to participate and contribute based on their own cost and performance targets without compromise on performance, compatibility and safety.

These and other features will be further apparent in view of the following discussion.

FIG. 1 depicts an example soft-pack battery pack 100 including four battery cells 110, 120, 130 and 140 in a package 150, in accordance with various embodiments. The battery pack is attached to a protection circuit module 160. Each battery cell has a cathode (+) end and an anode (-) end. The batteries are arranged end-to-end.

From a sustainability standpoint, replacing pouch cell-based battery packs is challenging due to the retention mechanism used during system integration, associated safety risks, and concerns with a manufacturer's warranty and liability. Although cylindrical cell based packs are typically heavier due to a metal case and have a lower energy density compared to pouch cells, they offer cost effectiveness, robustness, ease of manufacturing, and good thermal management. These advantages make them suitable for certain types of laptops, especially those targeted for emerging cost-sensitive markets. Replacing these batteries can increase the lifetime of the device, thus supporting the sustainability criteria defined by various organizations such as Electronic Product Environmental Assessment Tool (EPEAT) and TCO Certified.

For example, using size 18650 batteries in 3S1P configuration, a battery capacity of ~30Wh to ~39Wh can be achieved with existing Lithium Nickel Cobalt Aluminum (NCA) technology. Higher configurations in series, or more parallel cells, will yield higher capacity or different power mode (voltage, current). FIG. 1 shows an example structure of such a soft-pack. The outer package can be a soft-sided material including a polyester film such as Mylar^{®}. This material helps provide insulation around the conductive interconnects. Generally, a battery cell includes positive and negative polarity plates or contacts. Mylar^{®} can be used as an insulator to prevent shorting between the cell shell with the polarity plates. It also insulates the shell or outer surface of the battery cell from any conductive exterior objects to prevent a safety hazard. Mylar^{®} or other material can be used if the barrel structure which holds the battery package is made of conductive material.

The outer shell of a lithium polymer cell, e.g., a pouch cell, can be an aluminum laminated film or aluminum plastic film, for instance. Both sides of an aluminum layer are covered by plastic films. The aluminum layer and the films form a sheath that holds the cell electrodes, current collector and the electrolyte. Once sealed, cold or hot pressed, charged/discharged, for a few cycles, a pouch cell is degassed, taped, and formed for the next manufacturing process.

The PCM is a circuit board which protects the battery such as by monitoring its voltage, current, and temperature, and automatically shutting off the power supply if it detects unsafe conditions such as overcharging voltage, overcharging current, over-discharging voltage, over-discharging current, a short circuit, or extreme temperatures.

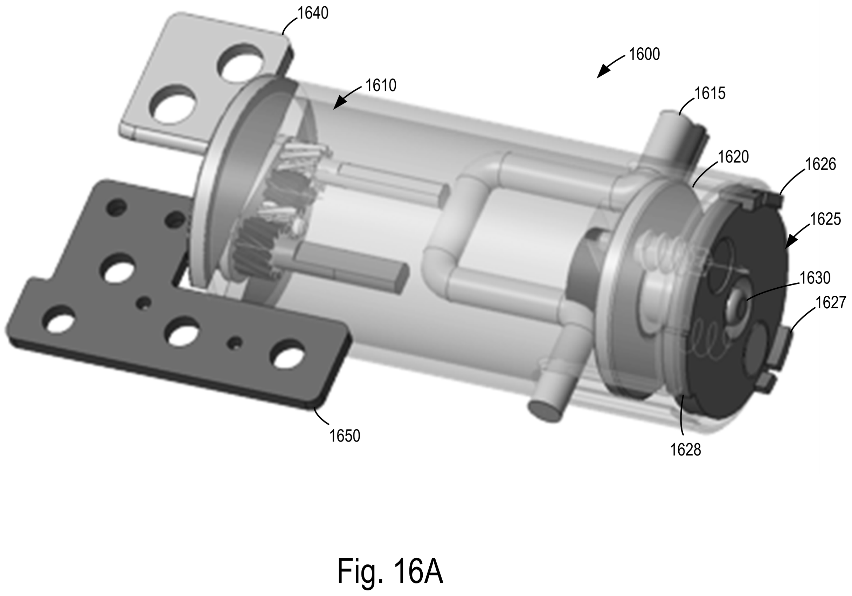

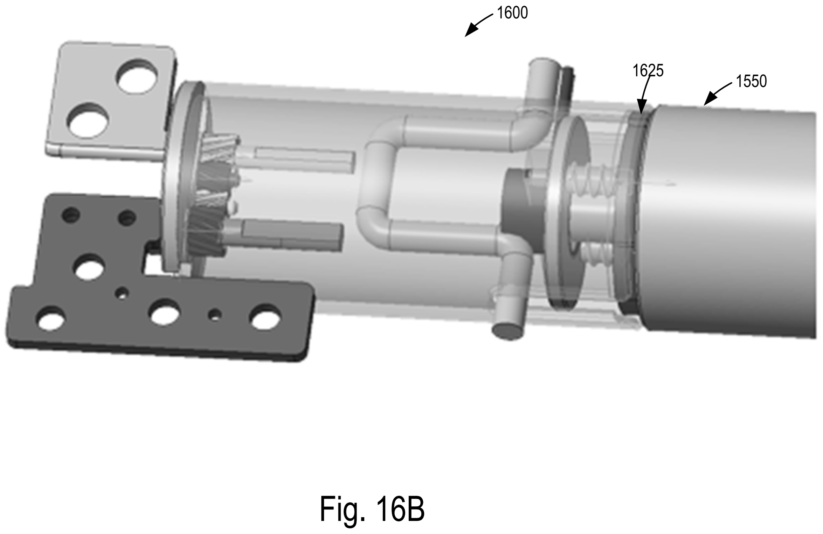

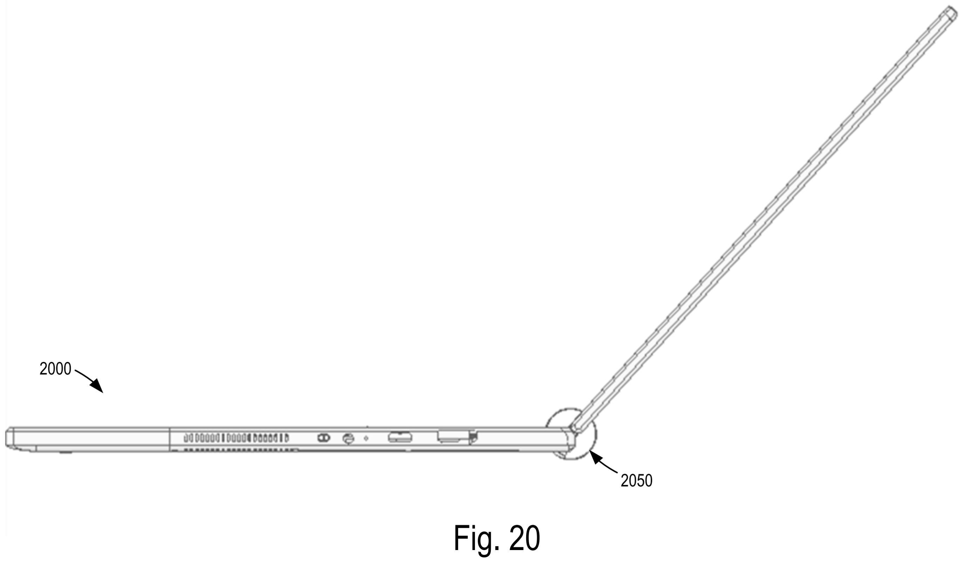

FIG. 2 depicts an example view of a display hinge structure 200 of a laptop to hold a battery pack such as the battery pack 100 of FIG. 1, in accordance with various embodiments. The structure can be located at the hinge area of a laptop (see also FIG. 20) between the keyboard and the screen. The structure includes a barrel container 210, e.g., a cylindrical container, and opposing first and second hinge assemblies 220 and 230, respectively. The hinge assemblies may include spring-loaded components which mate to the barrel container to hold the barrel container in place. See also FIGs. 16A and 16B.

In an example embodiment, the solutions support a thinner profile device by incorporating a soft battery pack based on size 18650 cells, designed with one or more predefined key structures to fit seamlessly into the metal hinge of a laptop which has an inverted key (complementary pattern) on the hinge side. This structure may be adapted to expose the terminals of the soft battery pack, ensuring that the power terminals make contact with the device side when slid into place. It may also expose signal connectivity terminals that make contact with annular rings that allow connectivity on the terminal side when slid in thus allowing the implementation of a smart battery pack.

FIG. 3 depicts an example cross-sectional view of the hinge structure 200 of FIG. 2, in accordance with various embodiments. The interior 310 of the barrel container 210 is depicted.

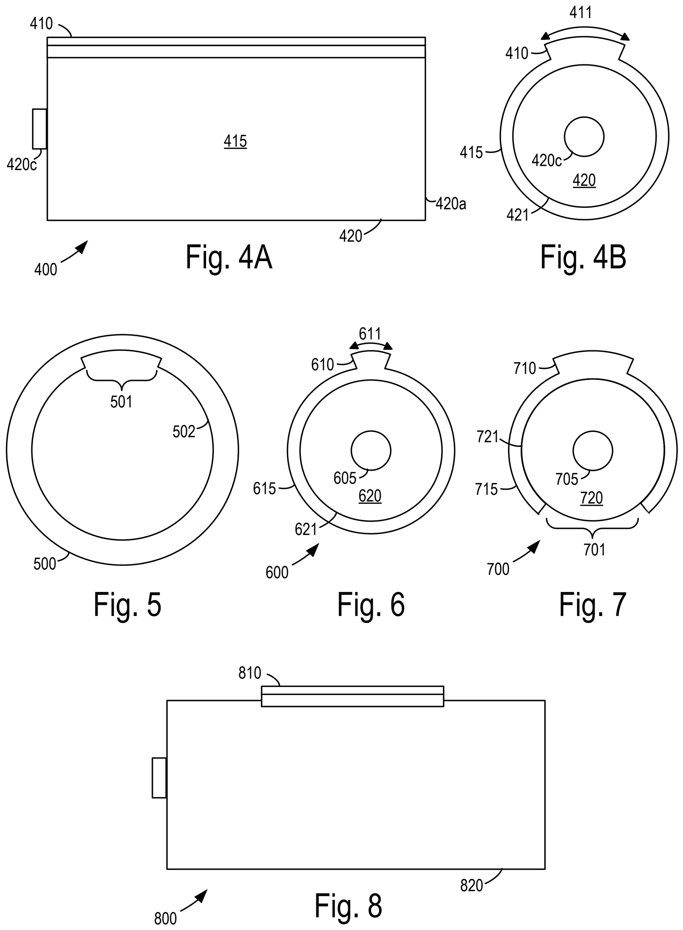

FIG. 4A depicts a side view of an example battery package 400 including a key structure 410, in accordance with various embodiments. The battery package includes a battery cell 420 including an outer surface 421 (or layer), a cathode 420c at its front face and an anode 420a at its opposing rear face. The package depicts a single battery cell for simplicity, but generally a battery package can include one or more battery cells in parallel and/or series. A key structure 410 is formed on the outer surface of the battery cell. In one approach, the key structure is part of a cylindrical wall 415 which extends around the battery cell. The key structure and cylindrical wall may be a hard plastic, for example, made of hard synthetic plastic such as Bakelite^{®}, polystyrene, polyvinyl chloride (PVC), polyethylene, and nylon. The implementation could also be that the hard key is mounted as a part of the mylar covering the soft battery pack.

The plastic key structure and wall can be molded and subsequently assembled around the battery package with a tight fit and/or using adhesive for rigidity. Another example manufacturing process for providing the key structure and wall includes placing an existing battery in a mold which has the shape of the key structure, injecting heated plastic in liquid form into the mold, then allowing the plastic to cool and harden, and then removing the mold.

FIG. 4B depicts a front view of the battery package 400 of FIG. 4A, in accordance with various embodiments. The key structure 410 includes an protruding portion which extends over a circumference of the battery package by a circumferential distance or arc length denoted by the arrow 411. The key structure can be integral with (e.g., formed from a common piece of plastic) a wall 415 or sleeve which extends around the circumference of the battery package. The key structure and wall extend substantially the entire length of the battery package as depicted in FIG. 4A in this example or could cover only a partial length of the battery package. The dimensions of one or more key structures can be varied in different ways to encode one or more characteristics of the battery package. For example, the characteristics can include a chemistry, indicating a type of the battery package/cells. In one approach, the dimensions are coded based on and/or to indicate whether the battery package comprises lithium ferrophosphate, lithium nickel manganese cobalt oxide, or lithium cobalt oxide (examples of different chemistries). The characteristics can also include a voltage, current, power, capacity, efficiency, charge and discharge ratings, and whether the battery is rated for extreme environmental conditions, e.g., very high or low temperatures. The characteristics can guide recyclers to follow a set of known processes and parameters to retrieve precious metals in batteries adequately for circular economy. It is also possible to have one or more key structures which are currently undefined but reserved for future use.

The encoding of the dimensions of one or more key structures to one or more characteristics of battery packages can be based on published information which is provided by an industry standards group for batteries for self-reported compliance.

The capacity of a battery can be measured in mAh (milliamp hours), and indicates how long the battery will last on a single charge. For example, a capacity of 3000mAh indicates the battery can discharge at 3.0 amps for one hour.

The voltage of a battery can indicate a charged voltage, a nominal voltage and/or a discharged voltage. The charged voltage is a maximum voltage that should not be exceeded to avoid damage to the battery. The nominal voltage indicates a voltage of the battery where it lasts the most amount of time during discharge or charge. It lies between the maximum and minimum voltage of the battery. The discharged voltage is a minimum voltage that should be maintained to avoid damage to the battery.

Discharge ratings include a constant C rating and a burst C rating. The constant C rating indicates how many amps can be safely drawn from the battery constantly. The "C" in a rating of xC (where x is a positive integer or decimal number) indicates the capacity of the battery in Ah. The burst C rating is higher than the constant C rating and indicates a maximum allowable burst of current in a time period such as ten seconds or an even higher C rate for a shorter time duration such as ten milli-seconds.

Charge ratings include a C rating which indicates the amperage at which the battery can be safely charged. The charge rate may not be a constant but depends on the charge profile in a step-charging method that uses different rate in various voltage ranges to maximize the battery capacity or energy density by cell manufacturers.

By providing a key structure which is coded to the battery chemistry and/or other characteristics, and by providing the container of the battery package with a corresponding mating structure, e.g., one or more inverse keys, it can ensure that one or more appropriate battery packages can be installed in the same battery container.

FIG. 5 depicts a front view of an example container 500 for the battery package 400 of FIG. 4A and 4B, in accordance with various embodiments. The container can be cylindrical and provided in the display hinge area of a laptop computer, in one possible approach. The container includes a recess 501 on its interior wall 502. The recess has a corresponding shape as the key structure 410 so that the battery package can be inserted into the end of the container only when the battery package is in a specified rotational position relative to the container, in one implementation. In another possible implementation, the container opens along its length and the battery package is placed into the container. The battery package is placed in a specified rotational position relative to the container to be properly seated in the container, e.g., with the key structure 410 mated to the recess 501. In both cases, the key on the battery package should match the inverse key on the container.

FIG. 6 depicts a front view of another example battery package 600, where the key structure 610 is narrower than the key structure 410 of FIG. 4B, in accordance with various embodiments. The battery package 600 includes a battery cell 620 with an outer surface 621, a cathode/anode contact 605, a circumferential wall 615 and a key structure 610 including an arc length denoted by an arrow 611. In some cases the circumferential wall 615 may be made of mylar or some other strong insulative material that is only a few hundred microns thick and the key-structure may be mounted on it through suitable gluing mechanism.

In an example implementation, the key structure arc length of arrow 411 in FIG. 4B is coded to a first battery chemistry, e.g., one of lithium ferrophosphate, lithium nickel manganese cobalt oxide, or lithium cobalt oxide, and the key structure arc length of arrow 611 in FIG. 6 is coded to a second battery chemistry, e.g., another of lithium ferrophosphate, lithium nickel manganese cobalt oxide, or lithium cobalt oxide.

FIG. 7 depicts a front view of another example battery package 700, where the key structure 710 has the same arc length as the key structure 410 of FIG. 4B, but the cylindrical wall 715 does not fully encircle the battery cell 720, in accordance with various embodiments. The cylindrical wall 715 only partially encircles or surrounds the battery cell 720. The battery package 700 includes a battery cell 720 with an outer surface 721, a cathode contact 705, the circumferential wall 715 which extends partially but not fully surround the battery cell 720, and a key structure 710. A region 701 of the battery package is exposed in this example.

The battery package can be held in the circumferential wall using, e.g., a friction fit and/or an adhesive. The key structure and the circumferential wall are permanently affixed to the battery package during manufacturing to prevent any tampering afterward, as one embodiment.

FIG. 8 depicts a side view of an example battery package 800 similar to FIG. 4A but where the key structure 810 extends only partially along the length of the battery package, in accordance with various embodiments. This example indicates that the key structure does not have to extend the full length of the battery package. Additionally, the key structure is located midway along the length of the battery package, spaced apart from the front and rear of the battery package. A battery cell 820 is also depicted.

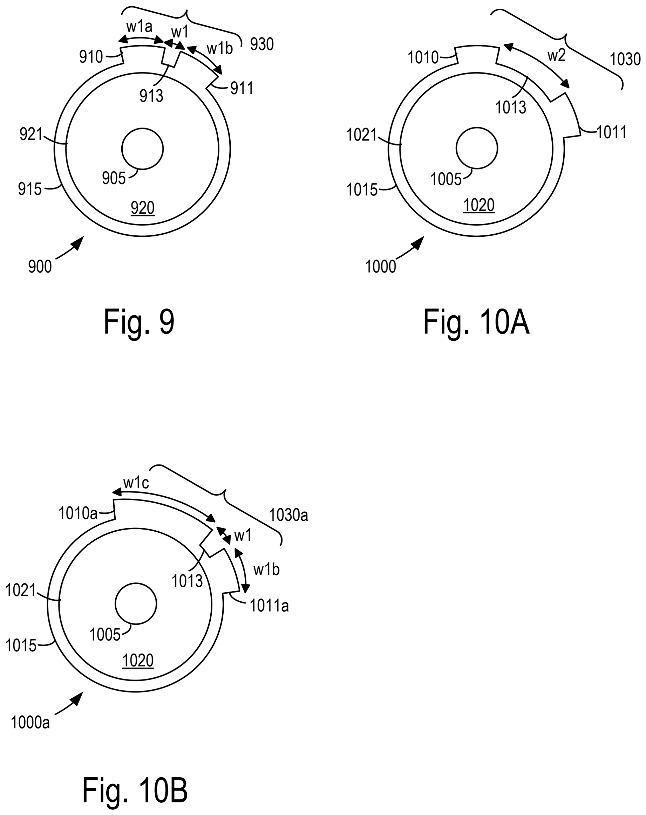

FIG. 9 depicts a front view of another example battery package 900 with a key structure 930 including a recess 913 with a first arc length w1 (or circumferential distance) formed between protrusions 910 and 911, the recess not necessarily being symmetrically placed between the protrusions 910 and 911, in accordance with the encoding scheme in various embodiments. The battery package 900 includes a battery cell 920 with an outer surface 921, a cathode contact 905, a circumferential wall 915 and the key structure 930.

This is an example of at least two key structures which extend along the length of a cylindrical wall of a battery package at different circumferential positions, where the key structures have a dimension which is coded to a characteristic of the battery package, and the dimension comprises a circumferential distance w1 which separates the at least two key structures.

FIG. 10A depicts a front view of another example battery package 1000 with a key structure 1030 including a recess 1013 with a second arc length w2>w1 formed between protrusions 1010 and 1011, in accordance with various embodiments. The battery package 1000 includes a battery cell 1020 with an outer surface 1021, a cathode contact 1005, a circumferential wall 1015 and the key structure 1030.

In an example implementation, the key structure arc length w1 in FIG. 9 is coded to a first battery chemistry, and the key structure arc length w2 in FIG. 10A is coded to a second battery chemistry.

FIG. 10B depicts a front view of another example battery package 1000a with a key structure 1030a including a recess 1013 with an arc length w1 formed between protrusions 1010a and 1011a with arc lengths w1c and w1b, respectively, in accordance with various embodiments. This example shows how the protrusions can be no-symmetric, e.g., having different arc lengths.

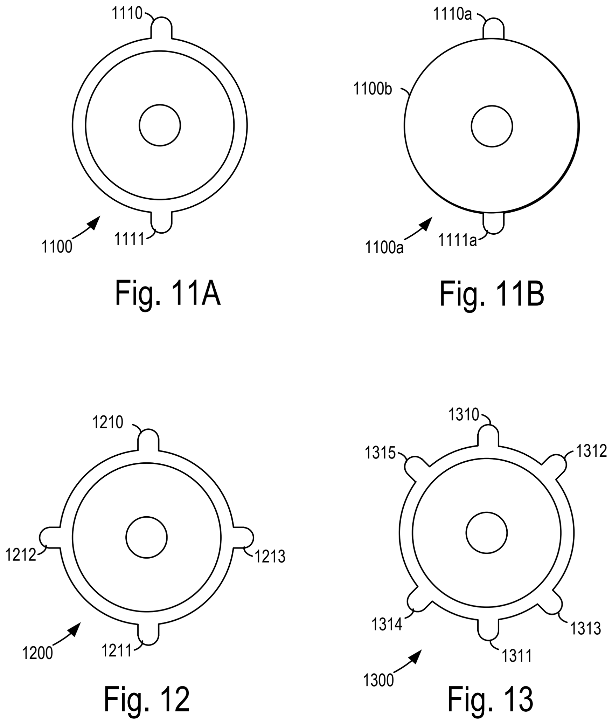

FIG. 11A depicts a front view of an example battery package 1100 with a key structure including two protrusions 1110 and 1111, in accordance with various embodiments. Note that these rounded protrusions have a slightly different shape compared to the arcuate protrusions depicted previously. In one option, the shape of at least one protrusion or recess is coded to a chemistry or other characteristic of a battery package. For example, the protrusions 1110 and 1111 have a rounded off shape (e.g., a half circle) while the protrusions 910 and 911, for example, have a squared off, arcuate shape. The protrusions are at opposing ends of the battery package, in this example.

FIG. 11B depicts a front view of an example battery package 1100a with a key structure including two protrusions 1110a and 1111a attached directly to the outer surface 1100b of a soft-sided battery, in accordance with various embodiments. The attachment can be made using adhesive, for example. A circumferential wall may not be used in this example.

FIG. 12 depicts a front view of an example battery package 1200 with a key structure including four protrusions 1210, 1211, 1212 and 1213, in accordance with various embodiments. The protrusions are spaced at even increments, e.g., every 90 degrees, along the circumference of the battery package, in this example. Note that the key structures of FIG. 11A are a subset of the key structures of FIG. 12. This may be appropriate where the different key structures of FIGs. 11 and 12 are coded to different battery chemistries which are both compatible with a portable computing device. That is, a battery package with the key structure of FIG. 11A or 12 could potentially be used in the same device.

FIG. 13 depicts a front view of an example battery package 1300 with a key structure including six protrusions 1310, 1311, 1312, 1313, 1314 and 1315, in accordance with various embodiments. In this example, the key structures of FIG. 11A but not FIG. 12 are a subset of the key structures of FIG. 13. This may be appropriate where the different key structures of FIGs. 11 and 13 are coded to different battery chemistries which are both compatible with a portable computing device. However, the key structure of FIG. 12 is coded to a battery chemistry which is not compatible with the portable computing device. Thus, a battery package with the key structure of FIGs. 11 or 13, but not FIG. 12, could potentially be used in the same device.

Note that the protrusions/recesses of the key structures are shown as having a common height, but it is possible to have different protrusions/recesses with different heights. The height of protrusions/recesses can be coded to a battery chemistry and/or other characteristics.

Also, in addition to the key structures, coloring can be used on the battery package to identify safe battery chemistries for a computing device.

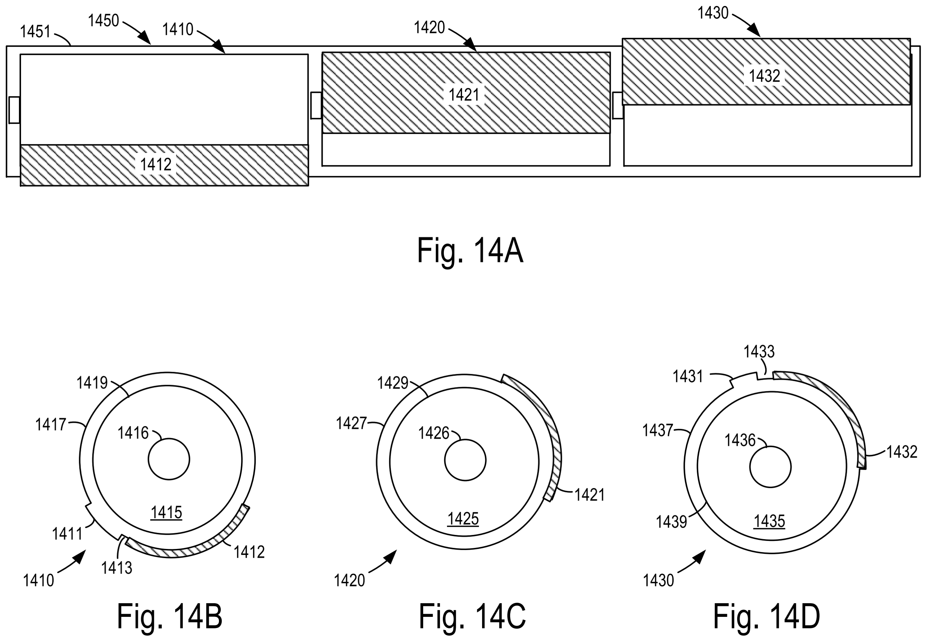

FIG. 14A depicts a side view of multiple battery packages 1410, 1420 and 1430 arranged serially which have different key structure protrusions 1412, 1421 and 1432, respectively, in accordance with various embodiments. The batteries are arranged end-to-end. This demonstrates that battery packages with different key structures can be used together. The battery packages are held within a container 1450 such as a barrel container. The container has an outer surface 1451. In this example embodiment, each cell has a different key structure not in the same rotation degree, such that, the soft pack cannot be slid into a container. Instead, it can be encased/wrapped by a two-piece container with the reverse key structures on the inner surface corresponding to each cell.

The key structures can be staggered on the outer surface of the battery pack. This approach allows the battery to be held in place as the soft-pack is rotated until it is seated into the hinge cylinder and thus held firmly within the device. The key structure may be placed at different angles circumferentially along the length of the battery package or it could run at the same angle over the full length of the battery package.

While the earlier demonstration is of the battery package having different key structures, it is possible to have this kind of staggered implementation with the same key structure too.

FIG. 14B depicts a front view of the battery package 1410 and key structure protrusion 1411 of FIG. 14A, in accordance with various embodiments. The battery package 1410 includes a battery cell 1415 with an outer surface 1419, a cathode/anode contact 1416, a circumferential wall 1417 and key structure protrusions 1411 and 1412 and a recess 1413.

FIG. 14C depicts a front view of the battery package 1420 and key structure 1421 of FIG. 14A, in accordance with various embodiments. The battery package 1420 includes a battery cell 1425 with an outer surface 1429, a cathode/anode contact 1426, a circumferential wall 1427 and a key structure protrusion 1421.

FIG. 14D depicts a front view of the battery package 1430 and key structure 1431 of FIG. 14A, in accordance with various embodiments. The battery package 1430 includes a battery cell 1435 with an outer surface 1439, a cathode/anode contact 1436, a circumferential wall 1437 and key structure protrusions 1431 and 1432 and a recess 1433.

FIGs. 14B-14D provide front views of the respective individual cell sections.

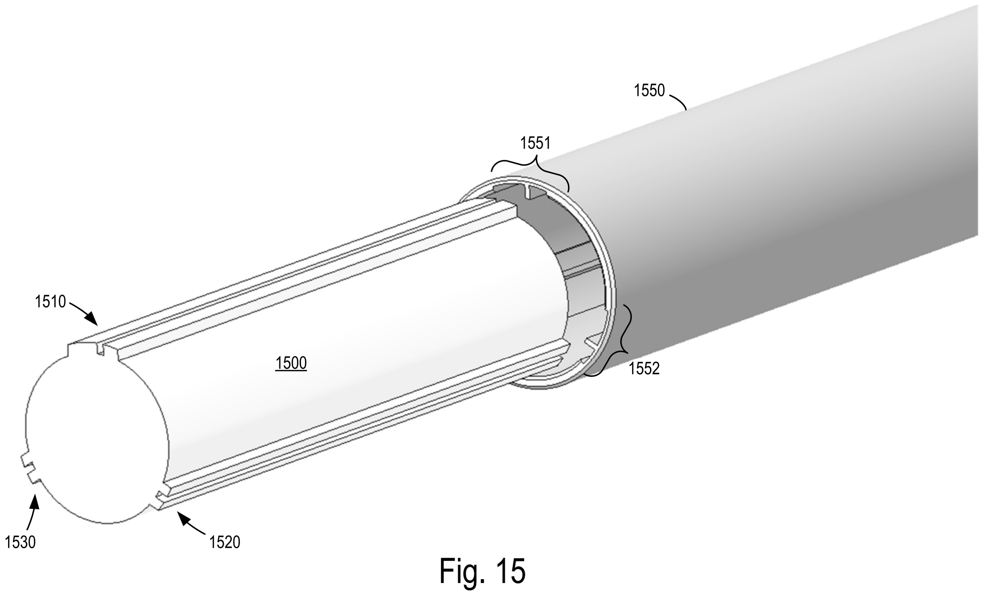

FIG. 15 depicts a view of an example battery package 1500 with key structures 1510, 1520 and 1530 being inserted into a corresponding battery package container 1550, in accordance with various embodiments. The container includes inverse key structures 1551 and 1552 which mate with the key structures 1510 and 1520, respectively. The container includes an additional inverse key structure (not shown) which mates with the key structure 1530.

Note that a key structure can be provided merely as a support mechanism, which may not have an exact inverse key structure, while still preventing the rotation of the battery pack.

The battery package, in the form of a hinge barrel in this example, is designed with an inverse key to accommodate only the intended type of battery package. The user only needs to buy the right type of battery and there is no possibility of error or mistake when the user inserts the battery pack into the barrel. The battery pack is inserted using a rotate and latch mechanism to ensure the battery is perfectly and snugly in place with minimal to no movement during drop-tests or actual usage conditions where the device could suffer shocks and vibrations. The user rotates the battery pack until the key structures are aligned with the inverse key structures of the container, then inserts the battery pack into the container.

FIG. 16A depicts a view of an example mating mechanism 1600 for the battery package container 1550 of FIG. 15, in accordance with various embodiments. The mechanism is at the display hinge area of a laptop and includes gears 1610 which allow the display screen to rotate relative to the keyboard of the laptop. The mechanism further includes brackets 1640 and 1650 to attach to the screen and keyboard, respectively. A conduit 1615 is used to route wires between the screen and the keyboard. A mounting surface 1620 is fixed in place, while a lock plate 1625 is attached to the mounting surface by springs. The lock plate includes structures 1626, 1627 and 1628 to mate with corresponding key structures of a battery package container. A central contact 1630 of the lock plate is to provide an electrical connection with a contact of the battery package container.

FIG. 16B depicts a view of the example mating mechanism 1600 of FIG. 16A with the battery package container 1550 of FIG. 15 attached, in accordance with various embodiments. Due to the spring force, the lock plate moves inside the battery package container when the container is pushed against the lock plate during assembly. The springs subsequently expand slightly once the assembly is completed.

In an example implementation, once a cylindrical soft-pack battery package is slid into the hinge barrel, the barrel can be easily slid into the hinge area for the electrical aspects of the battery pack to make contact with the main board and deliver power. The keying mechanisms described herein ensures the secure mating of the hinge-barrel to the rest of the system.

An example assembly procedure for battery replacement is as follows. First, the spring mechanism on the hinge assembly allows the user to easily detach the battery barrel from the hinge assembly. Second, the damaged or aged soft-pack battery can be removed from the battery barrel and replaced by a new soft-pack as long as the key and inverse key match and are oriented correctly. Subsequently, the battery barrel can be easily fixed back into position by retracting the spring mechanism on the hinge assembly and orienting the battery barrel correctly so that the key structure on the battery barrel is aligned with the inverse key structure on the hinge assembly. The mechanism will lock into place such that the battery barrel is both mechanical rigid and electrically well-connected by the use of pogo-pins on the lock-plate, for instance.

While the above refers to power connectivity, the mechanism can be extended to support signal connectivity if the Protection Circuit Module (PCM) is integrated as a part of the battery package. Alternatively, in cost-optimized laptop designs, signal connectivity may be facilitated if the PCM is a part of the battery barrel/container on the hinge side or part of the motherboard of the computing device.

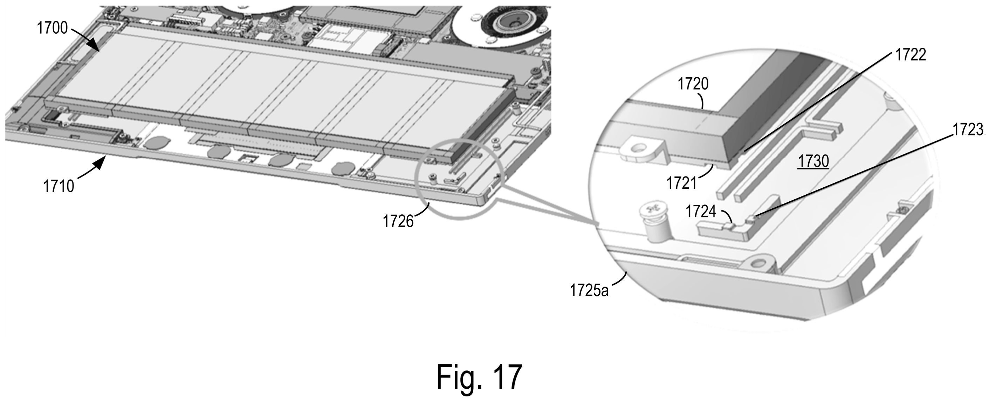

FIG. 17 depicts an example view of a rectangular battery pack 1700 including a key structure, in accordance with various embodiments. This shows a possible key and inverse key arrangement in the case of a pouch or prismatic battery pack including a rectangular frame, for instance. This approach ensures that once a specific inverse key structure is present on the chassis, the pack with only the mating key structure or pattern can be slotted into the device, ensuring safe replaceability and user-repairability.

In particular, the battery pack is held in a frame 1710 which has at least one key structure on its bottom, for example. The at least one key structure can include protrusions and/or recesses, for example. A portion 1725 of the battery pack and frame is depicted at the enlarged region 1725a. The frame 1720 includes recesses 1721 and 1722 at a corner region which mate with protrusions 1723 and 1724 on a chassis 1730, for instance.

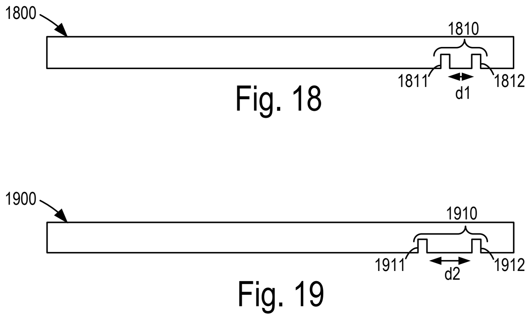

FIG. 18 depicts a cross-sectional view of an example frame 1800 for the rectangular battery pack 1700 of FIG. 17, where the frame has a key structure 1810 including recesses 1811 and 1812 with a distance d1 between the recesses, in accordance with various embodiments.

FIG. 19 depicts a cross-sectional view of an example frame 1900 for the rectangular battery pack 1700 of FIG. 17, where the frame has a key structure 1910 including recesses 1911 and 1912 with a distance d2>d1 between the recesses, in accordance with various embodiments.

In one approach, the key structure distance d1 in FIG. 18 is coded to a first battery chemistry, and the key structure distance d2 in FIG. 19 is coded to a second battery chemistry.

FIG. 20 depicts an example side view of a laptop computer 2000 including a barrel hinge 2050 for a battery pack, in accordance with various embodiments. The barrel hinge is an example of a battery container consistent with FIG. 2, 3, 16A and 16B, for example. Advantageously, the cylindrical hinge creates an air gap between the bottom of the laptop and the top of a surface that the laptop is placed on. This improves air circulation and thus thermal management. Only the hinge size will be increased while the rest of the system design, e.g., the keyboard and screen, can be thin and lightweight.

The use of a barrel-shaped container to accommodate the battery also frees up the entire base section to be used for any extra features desired such as a better thermal solution or Peripheral Component Interconnect Express (PCIe) or M.2 cards (a specification for internally mounted computer expansion cards and associated connectors) or any other interface-based cards to augment the device's functionality.

Generally, the same laptop design can support different markets by offering a modular approach. For example, high-energy density lithium cobalt oxide (LCO) battery cells can be used for a computing device subject to light usage such as browsing, video play back, productivity and light gaming. A moderate energy density battery cell with a high discharge capability can be used for processing-intensive applications such as in workstations and gaming. A sustainable low-cobalt or no-cobalt based design using Lithium nickel manganese cobalt oxides (NCM) or lithium iron phosphate battery (LFP) batter cells can be used for either of the above use-cases at a compromised energy density in order to reduce costs.

FIG. 21 depicts an front view of an example of a battery package container 2100 with battery packages 2120 and 2170 arranged in parallel, in accordance with various embodiments.

The key structures described herein can be extended to a multiple-row cylindrical battery design. This example shown has two rows of batteries side-by-side. Each row is held in a respective chamber of the battery package container, which is a hinge barrel chamber in this example.

In particular, the battery package 2120 includes a battery cell 2122 with a cathode/anode contact 2123, a circumferential wall 2121 and a key structure which includes protrusions 2130 and 2131 and a recess 2132. The battery package 2170 includes a battery cell 2172 with a cathode/anode contact 2173, a circumferential wall 2171 and a key structure which includes protrusions 2180 and 2181 and a recess 2182. A gap 2140 is present between the battery packages. The battery package container 2100 has an interior surface 2111 which corresponds to the battery packages 2120 and 2170 and their key structures.

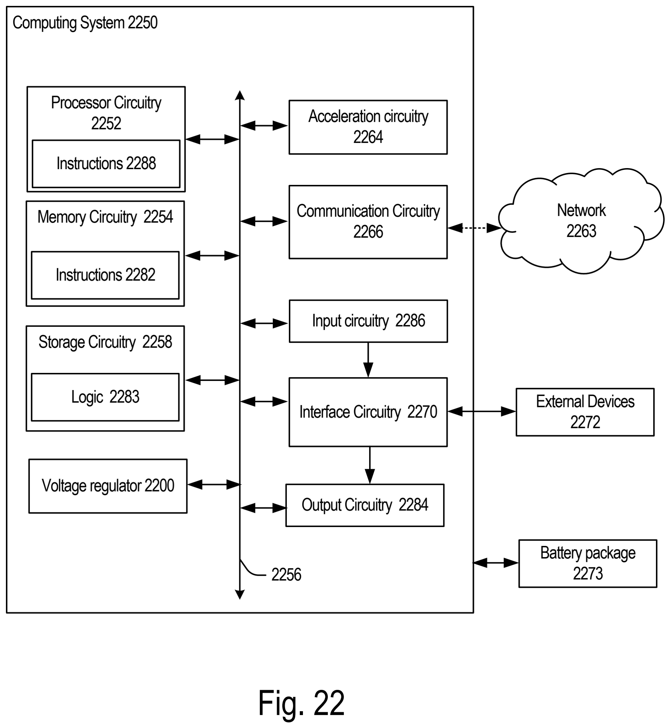

FIG. 22 illustrates an example of components that may be present in a computing system 2250 for implementing the techniques (e.g., operations, processes, methods, and methodologies) described herein.

The computing system 2250 may include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 2250, or as components otherwise incorporated within a chassis of a larger system. In an example implementation, the battery package 2273 represents one or more of the battery packages described herein.

In one approach, all or part of the computing system 2250 is provided in a SoP, System in Package (SiP) or a System on Chip (SoC).

Based on power from the battery package 2273, for instance, the voltage regulator 2200 can provide a voltage Vout to one or more of the components of the computing system 2250. The memory circuitry 2254 may store instructions and the processor circuitry 2252 may execute the instructions to perform the functions described herein.

The system 2250 includes processor circuitry in the form of one or more processors 2252. The processor circuitry 2252 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 2252 may include one or more hardware accelerators (e.g., same or similar to acceleration circuitry 2264), which may be microprocessors, programmable processing devices (e.g., FPGA, ASIC, etc.), or the like. The one or more accelerators may include, for example, computer vision and/or deep learning accelerators. In some implementations, the processor circuitry 2252 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor circuitry 2252 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low-voltage processor, an embedded processor, or any other known processing elements, or any suitable combination thereof. The processors (or cores) 2252 may be coupled with or may include memory/storage and may be configured to execute instructions stored in the memory/storage to enable various applications or operating systems to run on the platform 2250. The processors (or cores) 2252 is configured to operate application software to provide a specific service to a user of the platform 2250. In some embodiments, the processor(s) 2252 may be a special-purpose processor(s)/controller(s) configured (or configurable) to operate according to the various embodiments herein.

As examples, the processor(s) 2252 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 2252 may be a part of a system on a chip (SoC), System-in-Package (SiP), a multi-chip package (MCP), and/or the like, in which the processor(s) 2252 and other components are formed into a single integrated circuit, or a single package, such as the Edison^{™} or Galileo^{™} SoC boards from Intel^{®} Corporation. Other examples of the processor(s) 2252 are mentioned elsewhere in the present disclosure.

The system 2250 may include or be coupled to acceleration circuitry 2264, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 2264 may comprise logic blocks or logic fabric and other interconnected resources that may be programmed (configured) to perform various functions, such as the procedures, methods, functions, etc. of the various embodiments discussed herein. In such implementations, the acceleration circuitry 2264 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 2252 and/or acceleration circuitry 2264 may include hardware elements specifically tailored for machine learning and/or artificial intelligence (AI) functionality. In these implementations, the processor circuitry 2252 and/or acceleration circuitry 2264 may be, or may include, an AI engine chip that can run many different kinds of AI instruction sets once loaded with the appropriate weightings and training code. Additionally or alternatively, the processor circuitry 2252 and/or acceleration circuitry 2264 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 2252 and/or acceleration circuitry 2264 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin provided by Huawei^{®}, and/or the like. In some hardware-based implementations, individual subsystems of system 2250 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 2250 also includes system memory 2254. Any number of memory devices may be used to provide for a given amount of system memory. As examples, the memory 2254 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory 2254 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 2254 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 2258 provides persistent storage of information such as data, applications, operating systems and so forth. In an example, the storage 2258 may be implemented via a solid-state disk drive (SSDD) and/or high-speed electrically erasable memory (commonly referred to as "flash memory"). Other devices that may be used for the storage 2258 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 2254 and/or storage circuitry 2258 may also incorporate three-dimensional (3D) cross-point (XPOINT) memories from Intel^{®} and Micron^{®}.

The memory circuitry 2254 and/or storage circuitry 2258 is/are configured to store computational logic 2283 in the form of software, firmware, microcode, or hardware-level instructions to implement the techniques described herein. The computational logic 2283 may be employed to store working copies and/or permanent copies of programming instructions, or data to create the programming instructions, for the operation of various components of system 2250 (e.g., drivers, libraries, application programming interfaces (APIs), etc.), an operating system of system 2250, one or more applications, and/or for carrying out the embodiments discussed herein. The computational logic 2283 may be stored or loaded into memory circuitry 2254 as instructions 2282, or data to create the instructions 2282, which are then accessed for execution by the processor circuitry 2252 to carry out the functions described herein. The processor circuitry 2252 and/or the acceleration circuitry 2264 accesses the memory circuitry 2254 and/or the storage circuitry 2258 over the interconnect (IX) 2256. The instructions 2282 direct the processor circuitry 2252 to perform a specific sequence or flow of actions, for example, as described with respect to flowchart(s) and block diagram(s) of operations and functionality depicted previously. The various elements may be implemented by assembler instructions supported by processor circuitry 2252 or high-level languages that may be compiled into instructions 2288, or data to create the instructions 2288, to be executed by the processor circuitry 2252. The permanent copy of the programming instructions may be placed into persistent storage devices of storage circuitry 2258 in the factory or in the field through, for example, a distribution medium (not shown), through a communication interface (e.g., from a distribution server (not shown)), over-the-air (OTA), or any combination thereof.

The IX 2256 couples the processor 2252 to communication circuitry 2266 for communications with other devices, such as a remote server (not shown) and the like. The communication circuitry 2266 is a hardware element, or collection of hardware elements, used to communicate over one or more networks 2263 and/or with other devices. In one example, communication circuitry 2266 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 2266 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 2256 also couples the processor 2252 to interface circuitry 2270 that is used to connect system 2250 with one or more external devices 2272. The external devices 2272 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 2250, which are referred to as input circuitry 2286 and output circuitry 2284. The input circuitry 2286 and output circuitry 2284 include one or more user interfaces designed to enable user interaction with the platform 2250 and/or peripheral component interfaces designed to enable peripheral component interaction with the platform 2250. Input circuitry 2286 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 2284 may be included to show information or otherwise convey information, such as sensor readings, actuator position(s), or other like information. Data and/or graphics may be displayed on one or more user interface components of the output circuitry 2284. Output circuitry 2284 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 2250. The output circuitry 2284 may also include speakers and/or other audio emitting devices, printer(s), and/or the like. Additionally or alternatively, sensor(s) may be used as the input circuitry 2286 (e.g., an image capture device, motion capture device, or the like) and one or more actuators may be used as the output device circuitry 2284 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 2250 may communicate over the IX 2256. The IX 2256 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 2256 may be a proprietary bus, for example, used in a SoC based system.

The number, capability, and/or capacity of the elements of system 2250 may vary, depending on whether computing system 2250 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 2250 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible, non-transitory machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

Some non-limiting examples of various embodiments are presented below.

Example 1 includes an apparatus, comprising: a battery package including an outer surface; and at least one key structure, including at least one of a recess or a protrusion, wherein the at least one key structure is attached to the outer surface and has a dimension which is coded to a characteristic of the battery package.

Example 2 includes the apparatus of Example 1, wherein the characteristic comprises a chemistry of the battery package.

Example 3 includes the apparatus of Example 1 or 2, wherein the dimension is coded based on whether the battery package includes at least one of lithium ferro-phosphate, lithium nickel manganese cobalt oxide, lithium cobalt oxide, lithium nickel cobalt aluminum oxide, lithium titanium oxide, or lithium transitional-metal oxide and the transitional-metal oxide is at least one of nickel, manganese and cobalt or another chemical composition to make an active energy storage material.

Example 4 includes the apparatus of any one of Examples 1-3, wherein the dimension comprises an arc length of the at least one of the recess or the protrusion.

Example 5 includes the apparatus of any one of Examples 1-4, wherein at least one key structure is among two protrusions which extend along a length of the battery package, and the dimension comprises an arc length of a notch which is between the two protrusions.

Example 6 includes the apparatus of any one of Examples 1-5, wherein the dimension comprises a height of the at least one key structure.

Example 7 includes the apparatus of any one of Examples 1-6, further comprising a container for the battery package, wherein the container comprises at least one inverse key structure which extends along a length of the container and which is configured to mate with the at least one key structure when the battery package is in a specified rotational position relative to the container.

Example 8 includes the apparatus of Example 7, wherein the container comprises a hinged barrel of a laptop computer.

Example 9 includes the apparatus of any one of Examples 1-8, wherein the outer surface comprises a soft-sided material and the at least one key structure comprises a hard material.

Example 10 includes the apparatus of Example 9, wherein the soft-sided material comprises a film.

Example 11 includes the apparatus of any one of Examples 1-10, wherein the at least one key structure is integral with a circumferential wall which extends at least partly around the battery package.

Example 12 includes an apparatus, comprising: a battery package; and a rectangular frame extending around the battery package, wherein a bottom of the rectangular frame comprises at least one key structure, including at least one of a recess or a protrusion, and the at least one key structure has a dimension which is coded to a characteristic of the battery package.

Example 13 includes the apparatus of Example 12, wherein the battery package comprises a soft-sided pouch cell.

Example 14 includes the apparatus of Example 12 or 13, wherein the battery package comprises a hard-sided prismatic cell.

Example 15 includes the apparatus of any one of Examples 12-14, wherein the characteristic comprises a chemistry of the battery package.

Example 16 includes the apparatus of any one of Examples 12-15, wherein the at least one key structure is among at least two key structures at the bottom of the rectangular frame, and the dimension comprises a distance which separates the at least two key structures.

Example 17 includes an apparatus, comprising: a battery package including an outer surface; at least one key structure extending at least partly along a length of the outer surface, wherein the at least one key structure comprises at least one of a recess or a protrusion, and the at least one key structure has a dimension which is coded to a characteristic of the battery package; and a container for the battery package, wherein the container comprises at least one inverse key structure which extends at least partly along a length of the container and which is configured to mate with the at least one key structure when the battery package is in a specified rotational position relative to the container.

Example 18 includes the apparatus of Example 17, wherein: the battery package comprises a plurality of batteries in at least first and second rows side-by-side; and the at least one key structure includes a first key structure extending at least partly along a length of the outer surface in the first row and a second key structure extending at least partly along a length of the outer surface in the second row.

Example 19 includes the apparatus of Example 17 or 18, wherein the at least one key structure is integral with a wall which extends at least partly around the battery package.

Example 20 includes the apparatus of any one of Examples 17-19, wherein: the battery package comprises at least first and second batteries arranged end-to-end; at least one key structure includes a first key structure extending at least partly along a length of the outer surface adjacent to the first battery and a second key structure extending at least partly along a length of the outer surface adjacent to the second battery; and the first key structure is non-rotated or rotated relative to the second key structure.

In some example embodiments, the solutions provided herein include an energy storage system that is attached to a system including mobile computing systems, where the energy storage device has a mechanical structure depending on chemistries used in the energy storage system. The energy storage system can have the chemistry-dependent structure on part of the energy storage system surface. The pattern of the mechanical structure can depend on chemistries used in the energy storage systems. The system that the energy storage system is attached to can have a corresponding mechanical structure that matches the structure on the energy storage system.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus, comprising:
a battery package including an outer surface; and
at least one key structure, including at least one of a recess or a protrusion, wherein the at least one key structure is attached to the outer surface and has a dimension which is coded to a characteristic of the battery package.

2. The apparatus of claim 1, wherein the characteristic comprises a chemistry of the battery package.

3. The apparatus of claim 1 or 2, wherein the dimension is coded based on whether the battery package includes at least one of lithium ferro-phosphate, lithium nickel manganese cobalt oxide, lithium cobalt oxide, lithium nickel cobalt aluminum oxide, lithium titanium oxide, or lithium transitional-metal oxide, and the transitional-metal oxide includes at least one of nickel, manganese and cobalt, or another chemical composition.

4. The apparatus of any one of claims 1-3, wherein the dimension comprises an arc length of the at least one of the recess or protrusion.

5. The apparatus of any one of claims 1-4, wherein at least one key structure is among two protrusions which extend along a length of the battery package, and the dimension comprises an arc length of a notch which is between the two protrusions.

6. The apparatus of any one of claims 1-5, wherein the dimension comprises a height of the at least one key structure.

7. The apparatus of any one of claims 1-6, further comprising a container for the battery package, wherein the container comprises at least one inverse key structure which extends along a length of the container and which is configured to mate with the at least one key structure when the battery package is in a specified rotational position relative to the container.

8. The apparatus of claim 7, wherein the container comprises a hinged barrel of a laptop computer.

9. The apparatus of any one of claims 1-8, wherein the outer surface comprises a soft-sided material and the at least one key structure comprises a hard material.

10. The apparatus of claim 9, wherein the soft-sided material comprises a film.

11. The apparatus of any one of claims 1-10, wherein the at least one key structure is integral with a circumferential wall which extends at least partly around the battery package.

12. The apparatus of any one of claims 1-11, further comprising:
a rectangular frame extending around the battery package, wherein a bottom of the rectangular frame comprises the at least one key structure.

13. The apparatus of claim 12, wherein the at least one key structure is among at least two key structures at the bottom of the rectangular frame, and the dimension comprises a distance which separates the at least two key structures.

14. A method, comprising:
providing a battery package including an outer surface; and
providing at least one key structure, including at least one of a recess or a protrusion, wherein the at least one key structure is attached to the outer surface and has a dimension which is coded to a characteristic of the battery package.

15. The method of claim 14, wherein the characteristic comprises a chemistry of the battery package.
